# FASCICULE DE BREVET EUROPEEN

(11) **EP 1 174 302 B1**
(45) Date de publication et mention de la délivrance du brevet: **12.10.2005**
(21) Numéro de dépôt: 01401929.3
(22) Date de dépôt: 19.07.2001
(51) Int. Cl.: B60K 41/02

(54) **Procédé de commande pour un groupe motopropulseur**
Verfahren zur Steuerung einer Antriebseinheit
Motor driveline control method

(30) Priorité: 21.07.2000 FR 0010038
(43) Date de publication de la demande: 23.01.2002
(73) Titulaire: Renault s.a.s., 92100 Boulogne Billancourt (FR)
(72) Inventeur: Fournier, Vincent, 92300 Levallois Perret (FR); Desreumaux, Laurent, 92210 Saint Cloud (FR); Claverie, Jean, 64290 Bosdarross (FR)

(56) Documents cités:
- EP-A- 0 189 050
- DE-A- 19 616 960
- DE-A- 19 725 816
- DE-A- 19 809 060
- DE-A- 19 937 455
- US-A- 5 043 892
- US-A- 5 072 815
- US-A- 5 403 250

## Description

L'invention concerne un procédé de commande pour un groupe motopropulseur de véhicule automobile.

Elle s'applique aussi bien dans le cas d'un moteur diesel que d'un moteur à essence.

Plus précisément, elle a pour objet un procédé de commande d'un groupe motopropulseur comportant un moteur thermique relié à un mécanisme de changement de vitesses à rapports discrets par un embrayage d'entrée, et une unité centrale de gestion capable d'imposer au groupe motopropulseur au moins un mode courant de rapport établi et un mode de passage de rapport montant qui comprend au moins une première étape de débrayage, une deuxième étape de situation débrayée et une troisième étape de réembrayage où sont régulés, d'une part, le couple de glissement transitant par l'embrayage, en fonction de la demande du couple à la pédale d'accélérateur, et d'autre part, le couple fourni par le moteur.

On connaît de nombreux exemples de groupes motopropulseurs de ce type.

Dans de tels groupes motopropulseurs, le passage d'un rapport de rang courant à un rapport de rang déterminé, notamment un rapport de rang supérieur, s'effectue avec rupture du couple qui est transmis aux roues du fait du changement de rapport.

Lors du changement de rapport avec un groupe motopropulseur conventionnel, le couple moteur est estompé tant que la vitesse de rotation du moteur n'a pas atteint la vitesse de synchronisation nécessaire au réembrayage. Lorsque la vitesse de rotation du moteur et celle d'un arbre d'entrée de la boîte sont presque égales, l'embrayage est refermé pendant l'étape de réembrayage, d'abord rapidement jusqu'au point dit "de léchage" de l'embrayage, puis plus lentement, le couple moteur revenant progressivement au couple nominal.

Lorsque le groupe motopropulseur comporte une boîte de vitesses dite "robotisée", c'est à dire une boîte de vitesses dont l'actionnement des fourchettes et de l'embrayage est commandé par des vérins ou des moteurs électriques, il est possible de minimiser le temps de rupture de couple lors du passage des rapports.

Pendant le temps très court de passage d'un rapport à l'autre, II est très difficile de parvenir à la synchronisation de la vitesse de rotation du moteur et de la vitesse de l'arbre d'entrée de la boîte de vitesses en contrôlant seulement le moteur. En effet, aussi performants soient-ils, les moyens de contrôle du moteur sont limités par la faible valeur des couples de frottement interne et de pompage du moteur. Il est donc judicieux de freiner le moteur à l'aide de l'embrayage lors de l'étape de réembrayage.

Le document DE-A1-196.16.960 divulguant un procédé de commande en accord au préambule de la revendication 1, décrit un groupe motopropulseur de ce type pour lequel, lors du passage d'un rapport courant à un rapport de rang supérieur, l'unité centrale de gestion contrôle le couple transmis par l'embrayage. Elle adapte le couple transmis aux roues en contrôlant le couple de l'embrayage en comparant une valeur cible définie par la position d'une pédale d'accélérateur et le couple transmis calculé à partir de la dérivée de la vitesse de rotation du moteur.

L'inconvénient d'un tel groupe motopropulseur est que les opérations de comparaison et de calcul que réalisent les calculateurs de l'unité centrale de gestion sont longues, les vitesses d'échange entre les calculateurs moteur et boîte sont lentes, et les calculateurs embarqués actuels ne disposent pas de fréquences d'échantillonnage et de calcul suffisamment élevés pour garantir une réactivité suffisante du système.

Pour résoudre cet inconvénient, l'invention propose un groupe motopropulseur pour lequel le couple transmis par l'embrayage n'est pas constamment une fonction du régime moteur.

Elle prévoit à cet effet que l'embrayage reçoive au cours de la phase de réembrayage une consigne de position lui permettant de transmettre dès cette phase un couple égal au couple moteur en mode courant après le passage.

Selon d'autres caractéristiques de l'invention :
- la valeur du couple moteur en mode courant après le passage est calculée pendant le passage en fonction de la position de la pédale d'accélérateur ou d'éventuels systèmes d'aide à la conduite et du régime moteur après le passage ;
- la courbe d'évolution du couple transmis par l'embrayage en fonction du temps entre sa valeur initiale et sa valeur de consigne est fonction du style de conduite ;
- au cours de l'étape de réembrayage, l'unité centrale de gestion détecte un seuil déterminé de glissement de l'embrayage à partir duquel elle commande le rétablissement du couple fourni par le moteur en émettant à l'intention du moteur une consigne de régulation de couple qui évolue jusqu'à une valeur associée au mode courant ;
- le seuil de glissement est calibré selon le rapport de rang déterminé engagé, et de la rapidité d'évolution du régime moteur ;
- l'embrayage est un embrayage à disque(s) sec(s) et en ce que l'unité centrale de gestion traduit la valeur de la consigne indépendante de glissement en une valeur d'une consigne de position de la butée de l'embrayage ;
- l'unité centrale de gestion comporte des moyens d'auto-apprentissage qui permettent de réactualiser la relation entre et régulièrement au cours du fonctionnement du véhicule ;
- l'embrayage est un embrayage à disque(s) humide(s), l'unité centrale de gestion traduit la valeur de la consigne indépendante de glissement en une valeur d'une consigne de pression d'un vérin d'actionnement des disques, et la relation (C_{PV}) = f (Cc_{E}) peur être réactualisée régulièrement ;
- l'embrayage est un embrayage à poudre électromagnétique, l'unité centrale de gestion traduit la valeur de la consigne indépendante de glissement en une valeur d'une consigne de courant électrique d'un bobinage de l'embrayage, et la relation (Cc_{B}) = f (Cc_{E}) peur être réactualisée régulièrement ;
- l'embrayage est un système capable de transmettre le couple désiré tant qu'il est glissant, ce couple ayant une relation directe avec une grandeur physique pilotable par l'unité centrale de gestion (30), et cette relation peut être réactualisée régulièrement.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un groupe motopropulseur selon l'invention ;
- les figures 2a, 2b, 2c, et 2d sont des diagrammes schématiques représentant respectivement les vitesses de rotation du moteur et de l'arbre d'entrée de la transmission, la position d'une butée de l'embrayage, le couple du moteur, et le couple transmis aux roues en fonction du temps écoulé depuis le début du mode de passage du rapport déterminé pour un groupe motopropulseur réalisé conformément à un état antérieur de la technique ;
- les figures 3a, 3b, 3c, et 3d sont des diagrammes schématiques représentant respectivement les vitesses de rotation du moteur et de l'arbre d'entrée de la transmission, la position d'une butée de l'embrayage, le couple du moteur, et le couple transmis aux roues en fonction du temps écoulé depuis le début du mode de passage du rapport déterminé pour un groupe motopropulseur réalisé conformément à l'invention ;
- la figure 4 est un organigramme illustrant le fonctionnement de l'unité centrale de gestion pendant l'étape de réembrayage.

Dans la description qui va suivre, des chiffres de référence identiques désignent des pièces identiques ou ayant des fonctions similaires.

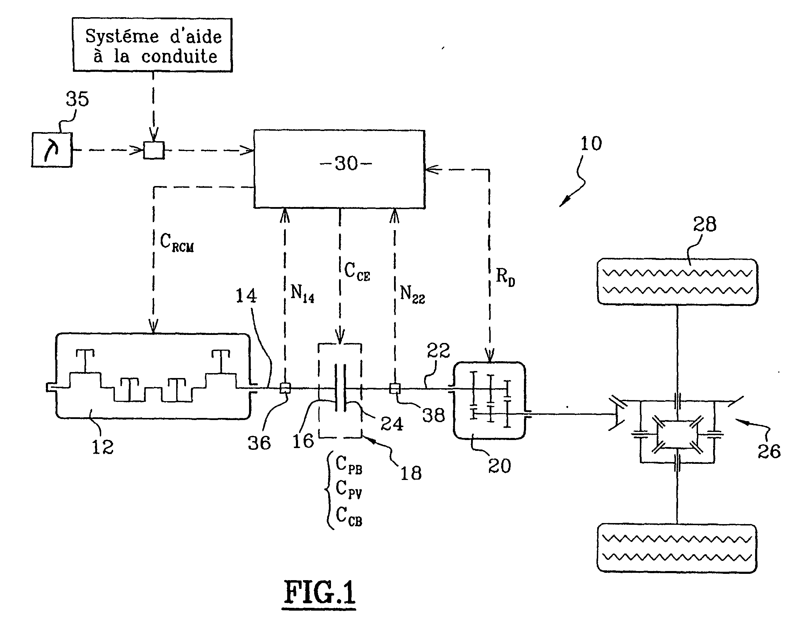

On a représenté à la figure 1 l'ensemble d'un groupe motopropulseur 10.

De manière connue, le groupe motopropulseur 10 comporte un moteur thermique 12 dont un arbre 14 est accouplé à un premier élément 16 d'un embrayage 18, pour entraîner par son intermédiaire une transmission du véhicule. La transmission comporte notamment une boîte de vitesses 20, dont un arbre d'entrée 22 est accouplé à un deuxième élément 24 de l'embrayage 18, et qui est susceptible d'établir des rapports discrets de démultiplication pour entraîner, par l'intermédiaire d'un pont 26, des roues 28 du véhicule.

La boîte de vitesses 20 est pilotée par une unité centrale de gestion 30 du groupe motopropulseur 10, de manière automatisée ou en réponse à l'actionnement d'un levier (non représenté) de commande du véhicule.

L'unité centrale de gestion 30 commande aussi l'embrayage 18 et le couple du moteur 12.

A cet effet, l'unité centrale 30 est susceptible d'émettre une consigne "C_{RCM}" de régulation du couple moteur et d'émettre une consigne "C_{CE}" de couple transmis par l'embrayage 18.

Différents types d'embrayages 18 peuvent être utilisés.

L'embrayage 18 peut être un embrayage à disque(s) sec(s). Dans ce cas, l'unité centrale de gestion 30 traduit la valeur de la consigne "C_{cE}" de couple de l'embrayage en une valeur d'une consigne "C_{PB}" de position de la butée de l'embrayage 18.

L'embrayage 18 peut aussi être un embrayage à disque(s) humide(s). Dans ce cas, l'unité centrale de gestion 30 traduit la valeur de la consigne "C_{CE}" de couple de l'embrayage en une valeur d'une consigne "C_{PV}" de pression d'un vérin d'actionnement des disques.

L'embrayage 18 peut encore être un embrayage à poudre électromagnétique. Dans ce cas, l'unité centrale de gestion 30 traduit la valeur de la consigne "C_{CE}" de couple de l'embrayage en une valeur d'une consigne "C_{CB}" de courant électrique d'un bobinage de l'embrayage.

L'unité centrale de gestion 30 du véhicule peut recevoir une information N₁₄ de la vitesse de rotation du moteur 12 par l'intermédiaire d'un capteur 36 qui est agencé sur l'arbre 14 du moteur 10, et une information N₂₂ de la vitesse de rotation de l'arbre d'entrée 22, ou arbre primaire, de la boîte 20 par l'intermédiaire d'un capteur 38 qui est agencé sur l'arbre 22 d'entrée de la boîte.

Dans cette configuration, l'unité centrale de gestion 30 est susceptible de fonctionner suivant un mode courant, qui ne fait pas l'objet de la présente description, et un mode de passage d'un rapport courant à un rapport de rang déterminé, notamment un rapport de rang supérieur.

De manière connue, le mode de passage du rapport courant au rapport de rang déterminé comporte une étape de débrayage, une étape débrayée, puis, après le passage du rapport de rang déterminé, une étape de réembrayage au cours de laquelle l'unité centrale régule le glissement de l'embrayage 18 et le couple fourni par le moteur 12 pour que le couple transmis par l'embrayage 18, et donc le couple transmis aux roues, tende vers une valeur assujettie à la position de la pédale 35 d'accélérateur du véhicule, ou aux éventuels systèmes d'aide à la conduite et que, en même temps, la vitesse de rotation N₁₄ du moteur tende vers une vitesse de synchronisation avec la vitesse N₂₂ de l'arbre d'entrée 22 de la transmission.

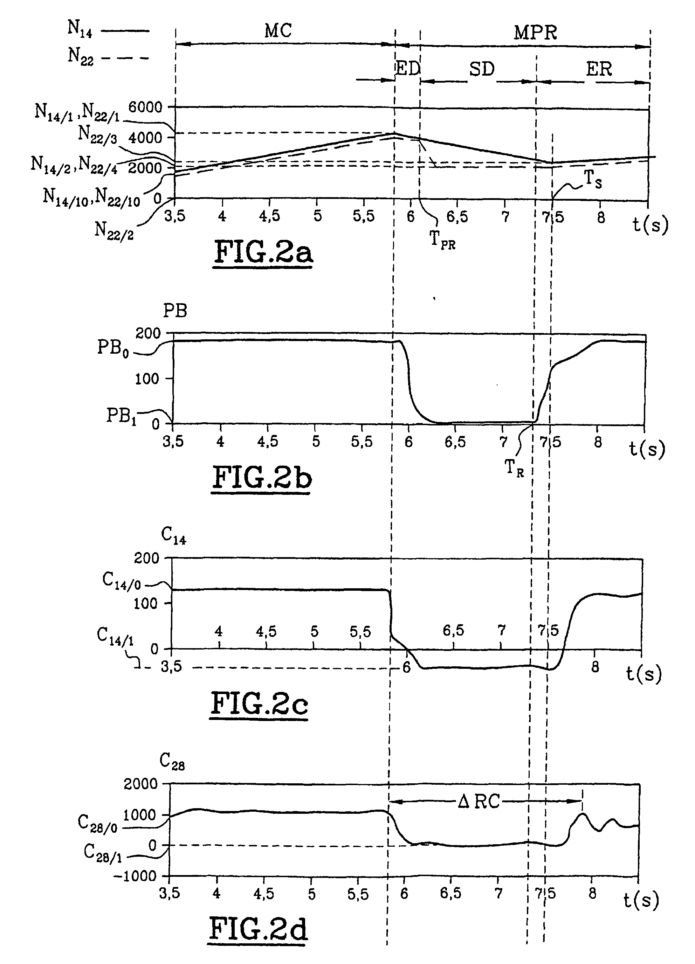

Le fonctionnement d'un groupe motopropulseur conventionnel correspondant à un état antérieur de la technique est présenté aux figures 2a à 2d dans le cadre d'un embrayage 18 à disque(s) sec(s) dont l'ouverture est déterminée par la position "PB" de sa butée. Les vitesses de rotation N₁₄ du moteur et N₂₂ de l'arbre d'entrée de la boîte, représentées figure 2a, sont exprimées en tours/minute. La position de la butée, représentée figure 2b, est exprimée en millimètres et est variable entre sa position de fermeture de l'embrayage (environ 200mm) et d'ouverture de l'embrayage (0 mm). Le couple C₁₄ du moteur et le couple C₂₈ transmis aux roues sont exprimés en Newton.mètre et sont représentés respectivement aux figures 2c et 2d.

De manière connue, le fonctionnement du groupe motopropulseur 10 selon un mode "MPR" de passage d'un rapport courant à un rapport de rang déterminé intervient entre deux périodes de fonctionnement du groupe motopropulseur associées chacune à un mode 'MC" courant, dont seule celle qui précède le changement de rapport à été représentée.

Pendant le mode "MC" courant, le rapport courant étant engagé et la valeur PB₀ de la position PB de la butée établissant la fermeture de l'embrayage 18, le couple C₁₄ du moteur 12 est sensiblement constant et s'établit à une valeur C_{14/0}. Les vitesses N₁₄ du moteur 12 et N₂₂ de l'arbre d'entrée de la boîte sont égales et croissent progressivement d'une valeur N_{14/0}, N_{22/0} à une valeur N_{14/1}, N_{22/1}. Le couple C₂₈ appliqué aux roues du véhicule est sensiblement constant et s'établit à une valeur C_{28/0}.

Le mode "MPR" de passage de rapport intervient lorsque l'unité centrale de gestion 30 commande l'ouverture de l'embrayage, c'est à dire lorsque la position PB de la butée passe de la valeur PB₀ à une valeur PB₁ établissant l'ouverture de l'embrayage 18.

Le mode "MPR" de passage d'un rapport courant à un rapport de rang déterminé comporte d'abord une première étape "ED" de débrayage, puis une deuxième étape de situation débrayée "SD" au cours de laquelle s'effectue le changement de rapport et une troisième étape de réembrayage "ER".

Au début de l'étape "ED", la position PB de la butée passant à la valeur PB₁, le couple C₁₄ chute jusqu'à une valeur C_{14/1} négative. La vitesse N₁₄ du moteur 12 décroît progressivement et la vitesse N₂₂ de l'arbre d'entrée de la boîte est synchronisée avec la vitesse de sortie de la boîte sur le nouveau rapport.

Le couple C₂₈ appliqué aux roues du véhicule chute jusqu'à une valeur C_{28/1} nulle.

A partir d'un instant T_{PR} de passage du rapport, qui intervient au cours de l'étape "SD", l'unité centrale 30 de gestion commande le crabotage du rapport R_{D} déterminé. Entre cet instant T_{PR} et la fin de l'étape "SD", La vitesse N₁₄ du moteur 12 continue de décroître progressivement, le couple moteur C₁₄ est maintenu sensiblement à une valeur C_{14/1} négative et le couple C₂₈ appliqué aux roues du véhicule se maintient sensiblement à la valeur C_{28/1} nulle.

Conformément aux figures 2a à 2d, à partir d'un instant T_{R} de début de réembrayage, qui marque le début de l'étape ER de réembrayage, la position PB de la butée passe à nouveau progressivement de la valeur PB₁ à la valeur PB₀. De la sorte, à un instant Tₛ de synchronisation qui est postérieur à l'instant T_{R}, les vitesses N₁₄ du moteur et N₂₂ de l'arbre d'entrée de la boîte s'égalisent suivant une valeur commune N_{14/2}, N_{22/4}. Le couple moteur C₁₄ est alors rétabli progressivement jusqu'à la valeur C_{14/0} initiale, ce qui a pour effet de provoquer l'augmentation des valeurs des vitesses N₁₄ du moteur et N₂₂ de l'arbre d'entrée de la boîte, et du couple C₂₈ jusqu'à une valeur C_{28/2} nominale.

L'inconvénient d'un tel pilotage est la durée élevée pendant laquelle le couple transmis aux roues est nul.

Comme indiqué plus haut, pour remédier à cet inconvénient, l'invention propose un procédé de commande du mode MPR de passage de rapport pour permettre à l'unité centrale 30 de gestion de réduire cette durée Δ_{RC}.

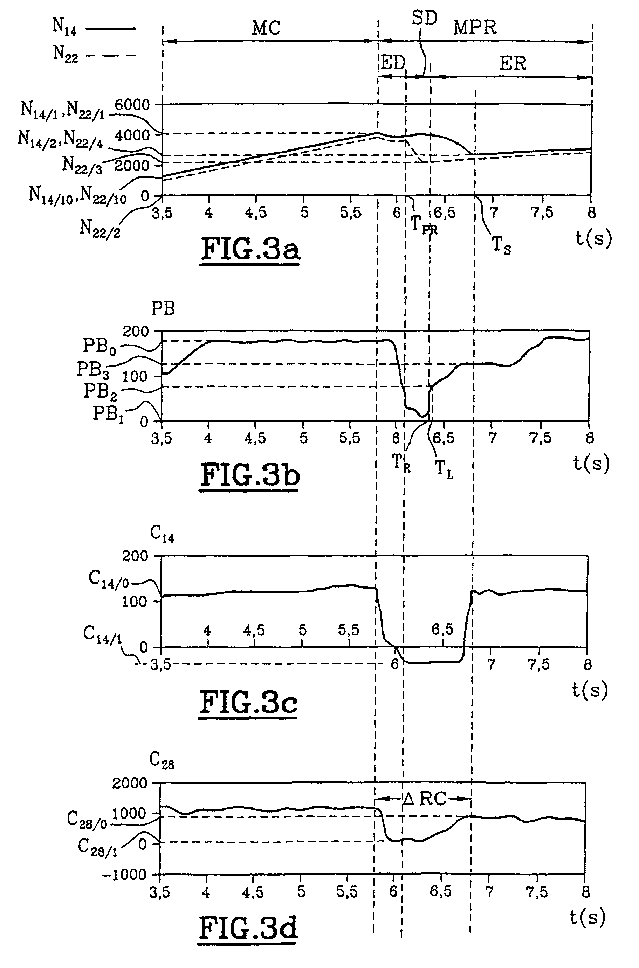

Conformément à l'invention, le groupe motopropulseur 10 est susceptible de fonctionner comme représenté aux figures 3a à 3d.

Le mode "MC" courant est sensiblement identique au mode "MC" se référant à l'état antérieur de la technique, et ne sera par conséquent pas décrit.

Au début de l'étape "ED", la position PB de la butée passant à la valeur PB₁ d'ouverture de l'embrayage 18, le couple C₁₄ chute jusqu'à la valeur C_{14/1} négative. La vitesse N₁₄ du moteur 12 décroît progressivement et la vitesse N₂₂ de l'arbre d'entrée de la boîte est synchronisée avec la vitesse de sortie de la boîte sur le nouveau rapport. Par suite, le couple C₂₈ appliqué aux roues du véhicule chute jusqu'à la valeur C_{28/1} nulle.

Avant l'étape "ER" de réembrayage, l'unité centrale de gestion 30 vérifie l'engagement du rapport déterminé, c'est à dire qu'elle vérifie que l'instant T_{PR} de passage du rapport est bien révolu. L'unité centrale 30 débute alors les séquences de l'étape "ER" de réembrayage.

La consigne C_{CE} de couple de l'embrayage est émise avec précision à l'instant T_{R} de réembrayage, pratiquement immédiatement après l'instant T_{PR} de passage du rapport. Ceci est rendu possible du fait de la grande réactivité de l'unité centrale de gestion 30 qui établit la valeur de consigne C_{CE} "en boucle ouverte" comme une fonction f₃ du couple moteur en mode courant après le passage, C_{MMC}, et du temps "t" écoulé, et non "en boucle fermée", c'est à dire en la recalculant constamment à partir de la variation du régime moteur.

La position PB de la butée, associée à la consigne C_{CE}, passe d'abord rapidement à une position PB₂ pour parvenir à un instant T_{L} au point "de léchage" de l'embrayage, le couple C₁₄ du moteur n'étant pas rétabli.

A partir de l'instant T_{L} de début de glissement de l'embrayage, la vitesse N₁₄ du moteur 12 commence à décroître plus rapidement que pour un groupe motopropulseur conventionnel, car le moteur est freiné par l'embrayage 20.

Conformément à l'invention, la consigne de couple C_{CE} que reçoit l'embrayage au cours de la phase de réembrayage ER lui permet de transmettre dès cette phase un couple égal au couple moteur C_{MMC} qui sera établi après le passage en mode courant.

De plus, cette prédiction de la valeur du couple moteur en mode courant après le passage est avantageusement calculée en fonction de la position de la pédale ou des éventuels systèmes d'aide à la conduite et du régime moteur après le passage.

Enfin, il est souhaitable que la courbe d'évolution de la position de la butée d'embrayage en fonction du temps entre sa position initiale et sa position associée à la consigne de position C_{PE} soit fonction du style de conduite.

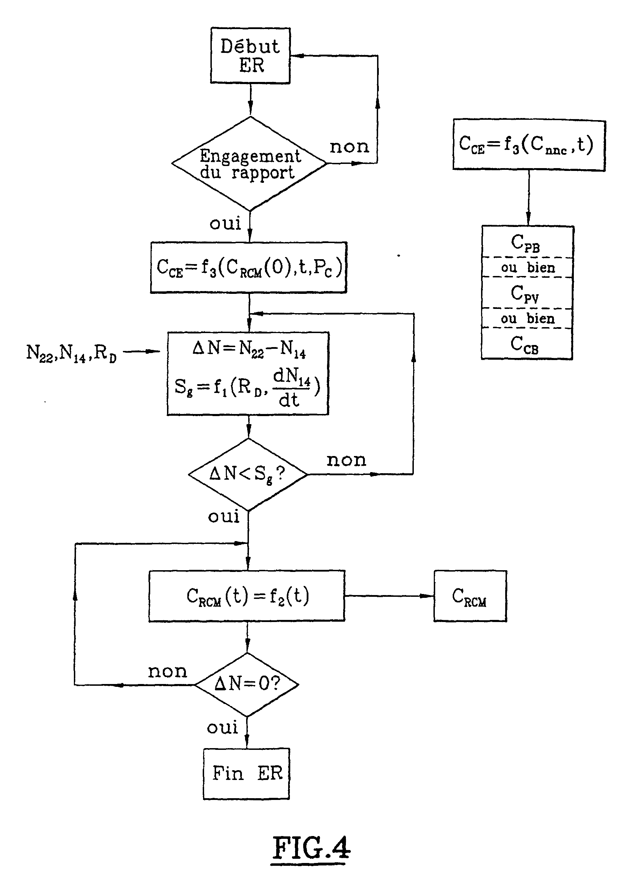

Par ailleurs, comme l'illustre l'organigramme de la figure 4, en fonction du type d'embrayage utilisé, c'est à dire un embrayage 18 à disque(s) sec(s), à disque(s) humide(s), ou électromagnétique à poudre, la consigne C_{CE} de position de l'embrayage permettant la régulation de son glissement est convertie respectivement soit en consigne "C_{PB}" de couple de la butée de l'embrayage 18, soit en consigne "Cₚᵥ" de pression d'un vérin d'actionnement des disques, soit en consigne "C_{CB}" de courant électrique d'un bobinage de l'embrayage.

Avantageusement, l'unité centrale de gestion 30 peut, dans le cas embrayage à disque(s) sec(s), comporter des moyens d'auto-apprentissage pour réactualiser régulièrement la relation entre C_{PB} et C_{CE} au cours du fonctionnement du véhicule.

L'unité centrale 30 reçoit, par l'intermédiaire des capteurs 36 et 38 décrits précédemment en référence à la figure 1, la valeur N₁₄ de la vitesse de rotation du moteur 12 et la valeur N₂₂ de la vitesse de rotation de l'arbre d'entrée 22 de la boîte 20.

L'unité centrale reçoit aussi une information R_{D} représentative du rapport déterminé engagé.

L'unité centrale 30 calcule alors la vitesse ΔN de glissement de l'embrayage, qui est égale à la différence de vitesse entre les valeurs N₂₂ de la vitesse de rotation de l'arbre d'entrée de la boîte 20 et N₁₄ de la vitesse de rotation du moteur 12.

Avantageusement, de façon non limitative de l'invention, l'unité centrale 30 pourrait aussi calculer un rapport des valeurs N₂₂ de la vitesse de rotation de l'arbre d'entrée de la boîte 20 et N₁₄ de la vitesse de rotation du moteur 12.

Sans sortir du cadre de l'invention, la vitesse N₂₂ peut ne pas être mesurée mais calculée à partir de la vitesse du véhicule et du rapport de démultiplication.

Par ailleurs, comme l'illustre l'organigramme de la figure 4 qui illustre ce procédé de commande, au cours de l'étape "ER" de réembrayage, l'unité centrale de gestion détermine un seuil S_{g} déterminé de vitesse de glissement de l'embrayage. Ce seuil S_{g} est notamment une fonction f₁ du rapport engagé R_{D}. L'unité centrale de gestion compare alors la vitesse ΔN de glissement de l'embrayage à ce seuil S_{g} et, en fonction du résultat de cette comparaison elle commande le rétablissement du couple C₁₄ fourni par le moteur 12 en émettant à l'intention du moteur une consigne C_{RCM} de régulation de couple qui évolue jusqu'à une valeur finale associée au mode courant.

Si la vitesse ΔN de glissement de l'embrayage est supérieure au seuil de vitesse S_{g}, l'unité centrale 30 retourne au stade précédent d'acquisition des vitesses N₂₂ et N₁₄.

Si la vitesse ΔN de glissement de l'embrayage est inférieure ou égale au seuil de vitesse S_{g}, l'unité centrale 30 émet alors la consigne C_{RCM} de régulation du couple moteur.

La consigne C_{RCM} de régulation du couple moteur est une fonction f₂ du temps et prend une valeur initiale C_{RCM}(0) qui correspond à la valeur de la consigne C_{RCM} de régulation du couple moteur pour une valeur nulle du temps "t" écoulé depuis l'émission de la consigne. A chaque instant "t", la consigne C_{RCM} place le moteur 12 au couple C₁₄ voulu.

Comme l'illustre la figure 4, la séquence se poursuit tant que la vitesse ΔN de glissement de l'embrayage 18 n'est pas nulle, c'est à dire tant que les vitesses de rotation du moteur 12 et de l'arbre 22 d'entrée de la boîte 20 ne sont pas égales.

Lorsque la vitesse ΔN de glissement de l'embrayage est nulle ou demeure très faible pendant un certain temps, le procédé de commande met fin à l'étape "ER" de réembrayage.

L'unité centrale 30, en émettant la consigne C_{CE} de couple lors du réembrayage, met fin à l'étape "ER" de réembrayage et donc au mode "MPR" de passage de rapport en ramenant progressivement selon une rampe la butée de sa position PB₂ à la position PB₀ initiale.

On constate que la durée Δ_{RC} de rupture du couple C₂₈, qui est comprise entre la fin du mode MC et l'instant Ts de l'étape "ER" de réembrayage, pendant laquelle le couple C₂₈ transmis aux roues n'est pas demeuré à sa valeur nominale C_{28/0} a été considérablement raccourcie, c'est à dire de l'ordre d'une seconde. De plus, la durée pendant laquelle le couple C₂₈ a été maintenu à la valeur nulle C_{28/1} est encore inférieure à la durée Δ_{RC}, c'est à dire de l'ordre d'une demi-seconde, puisque le couple C₂₈ croît dès l'instant T_{L} correspondant au point "de léchage" de l'embrayage.

L'invention permet avantageusement des changements de rapports rapides avec peu de rupture de couple.

## Revendications

1. Procédé de commande d'un groupe motopropulseur comportant un moteur thermique (12) relié à un mécanisme (20) de changement de vitesses à rapports discrets par un embrayage d'entrée (18), et une unité centrale (30) de gestion capable d'imposer au groupe motopropulseur au moins un mode courant de rapport établi (MC) et un mode de passage de rapport montant (MPR) qui comprend au moins une première étape (ED) de débrayage, une deuxième étape (SD) de situation débrayée, et une troisième étape (ER) de réembrayage au cours de laquelle sont régulés, d'une part, le couple de glissement transitant par l'embrayage (18), en fonction de la demande de couple de la pédale (35) d'accélérateur ou d'éventuels systèmes d'aide à la conduite, et d'autre part, le couple fourni par le moteur (12), **caractérisé en ce que** l'embrayage (18) reçoit à partir de l'instant Tr du début de l'étape de réembrayage (Er) une consigne de couple (Cc_{E}) établie en boucle ouverte comme une fonction du couple moteur qui sera établie après le passage en mode courant pour lui permettre de transmettre ce couple dès l'étape du réembrayage (ER).

2. Procédé de commande selon la revendication 1, **caractérisé en ce que** la valeur du couple moteur en mode courant (MC) après le passage est calculée pendant le passage en fonction de la position de la pédale (35) d'accélérateur ou d'éventuels systèmes d'aide à la conduite et du régime moteur après le passage:

3. Procédé de commande selon la revendication 1 ou 2, **caractérisé en ce que** la courbe d'évolution du couple transmis par l'embrayage en fonction du temps entre sa valeur initiale et sa valeur de consigne (C_{CE}) est fonction du style de conduite.

4. Procédé de commande selon la revendication 1, 2 ou 3, **caractérisé en ce que**, au cours de l'étape (ER) de réembrayage, l'unité centrale de gestion (30) détecte un seuil (S_{g}) déterminé de glissement de l'embrayage à partir duquel elle commande le rétablissement du couple (C₁₄) fourni par le moteur (12) en émettant à l'intention du moteur une consigne (C_{RCM}) de régulation de couple qui évolue jusqu'à une valeur (C_{14/0}) associée au mode courant.

5. Procédé de commande selon la revendication 4, **caractérisé en ce que** le seuil (S_{g}) de glissement est calibré selon le rapport (R_{D}) de rang déterminé engagé, et de la rapidité d'évolution du régime moteur.

6. Procédé de commande selon l'une des revendications 4 ou 5, **caractérisé en ce que** l'embrayage (18) est un embrayage à disque(s) sec(s) et **en ce que** l'unité centrale de gestion (30) traduit la valeur de la consigne (Cc_{E}) indépendante de glissement en une valeur d'une consigne (C_{PB}) de position de la butée de l'embrayage (18).

7. Procédé selon la revendication précédente, **caractérisé en ce que** l'unité centrale de gestion (30) comporte des moyens d'auto-apprentissage qui permettent de réactualiser la relation entre (C_{PB}) et (Cc_{E}) régulièrement au cours du fonctionnement du véhicule.

8. Procédé de commande selon l'une des revendications 4 ou 5, **caractérisé en ce que** l'embrayage (18) est un embrayage à disque(s) humide(s), **en ce que** l'unité centrale de gestion (30) traduit la valeur de la consigne (Cc_{E}) indépendante de glissement en une valeur d'une consigne (C_{PV}) de pression d'un vérin d'actionnement des disques, et ce que la relation (C_{PV}) = f (Cc_{E}) peur être réactualisée régulièrement.

9. Procédé de commande selon l'une des revendications 4 ou 5, **caractérisé en ce que** l'embrayage (18) est un embrayage (18) à poudre électromagnétique, **en ce que** l'unité centrale de gestion (30) traduit la valeur de la consigne (Cc_{E}) indépendante de glissement en une valeur d'une consigne (C_{CB}) de courant électrique d'un bobinage de l'embrayage (18), et ce que la relation (Cc_{B}) = f (Cc_{E}) peur être réactualisée régulièrement.

10. Procédé de commande selon l'une des revendications 4 ou 5, **caractérisé en ce que** l'embrayage (18) est un système capable de transmettre le couple désiré tant qu'il est glissant, ce couple ayant une relation directe avec une grandeur physique pilotable par l'unité centrale de gestion (30), et **en ce que** cette relation peut être réactualisée régulièrement.

## Patentansprüche

1. Steuerungsverfahren einer Antriebsgruppe, welche einen Verbrennungsmotor (12) aufweist, der mit einem Gangwechselmechanismus (20) mit diskreten Gängen über eine Eingangskupplung (18) verbunden ist, und eine zentrale Steuerungseinheit (30), die fähig ist, der Antriebsgruppe mindestens einen laufenden Modus des eingelegten Gangs (MC) und einen Übergangsmodus des aufsteigenden Gangs (MPR) aufzuerlegen, welches mindestens einen ersten Schritt (ED) einer Auskupplung umfasst, einen zweiten Schritt (SD) der ausgekuppelten Situation und einen dritten Schritt (ER) einer Wiedereinkupplung, im Verlaufe von welchem einerseits das durch die Kupplung (18) gehende Gleitmoment in Abhängigkeit der Momentennachfrage vom Gaspedal (35) oder gegebenenfalls von Fahrassistenzsystemen und anderseits das durch den Motor (12) gelieferte Moment geregelt werden, **dadurch gekennzeichnet, dass** die Kupplung (18) ausgehend vom Moment (Tr) des Beginns des Schritts der Wiedereinkupplung (ER) einen Momentensollwert (C_{CE}) empfängt, der in offener Schlaufe als eine Funktion des Motormoments aufgestellt wird, welches nach dem Übergang in den laufenden Modus hergestellt wird, um es ihr zu ermöglichen, dieses Moment ab dem Schritt der Wiedereinkupplung (ER) zu übertragen.

2. Steuerungsverfahren nach Anspruch 1, **dadurch gekennzeichnet, dass** der Wert des Motormoments im laufenden Modus (MC) nach dem Übergang während dem Übergang in Abhängigkeit von der Stellung des Gaspedals (35) oder eventueller Fahrassistenzsysteme und der Motordrehzahl nach dem Übergang berechnet wird.

3. Steuerungsverfahren nach Anspruch 1 oder 2, **dadurch gekennzeichnet, dass** die Entwicklungskurve des durch die Kupplung übertragenen Moments in Abhängigkeit von der Zeit zwischen ihrem Ausgangswert und ihrem Sollwert (C_{CE}) abhängig vom Fahrstil ist.

4. Steuerungsverfahren nach Anspruch 1, 2 oder 3, **dadurch gekennzeichnet, dass** im Verlaufe des Schritts (ER) einer Wiedereinkupplung die zentrale Steuerungseinheit (30) eine festgelegte Schwelle (S_{g}) eines Gleitens der Kupplung erfasst, ausgehend von welcher sie die Wiederherstellung des Moments (C₁₄) steuert, das durch den Motor (12) geliefert wird, unter Aussenden eines Sollwerts (C_{RCM}) einer Regelung des Moments an den Motor, der sich bis auf einen zum laufenden Modus zugehörigen Wert (C_{14/0}) entwickelt.

5. Steuerungsverfahren nach Anspruch 4, **dadurch gekennzeichnet, dass** die Schwelle (S_{g}) eines Gleitens kalibriert wird gemäß dem festgestellten, eingelegten Rangverhältnis (R_{D}) und der Entwicklungsschnelligkeit der Motordrehzahl.

6. Steuerungsverfahren nach einem der Ansprüche 4 oder 5, **dadurch gekennzeichnet, dass** die Kupplung (18) eine Kupplung mit trockener (trockenen) Scheibe(n) ist und dass die zentrale Steuerungseinheit (30) den vom Gleiten unabhängigen Wert des Sollwerts (C_{CE}) in einen Sollwert (C_{PB}) einer Stellung des Anschlags der Kupplung (18) übersetzt.

7. Verfahren nach dem vorangegangenen Anspruch, **dadurch gekennzeichnet, dass** die zentrale Steuerungseinheit (30) Selbstlernmittel aufweist, welche es ermöglichen, das Verhältnis zwischen (C_{PB}) und (C_{CE}) regelmäßig im Verlaufe des Betriebs des Fahrzeugs wieder zu aktualisieren.

8. Steuerungsverfahren nach einem der Ansprüche 4 oder 5, **dadurch gekennzeichnet, dass** die Kupplung (18) eine Kupplung mit nasser (nassen) Scheibe(n) ist, dass die zentrale Steuerungseinheit (30) den Wert des Sollwerts (C_{CE}) unabhängig vom Gleiten in einen Wert eines Sollwerts (C_{PV}) des Drucks eines Betätigungsstellglieds der Scheiben übersetzt und dass das Verhältnis (C_{PV}) = f(C_{CE}) regelmäßig wieder aktualisiert werden kann.

9. Steuerungsverfahren nach einem der Ansprüche 4 oder 5, **dadurch gekennzeichnet, dass** die Kupplung (18) eine Kupplung (18) mit elektromagnetischem Pulver ist, dass die zentrale Steuerungseinheit (30) den Wert des vom Gleiten unabhängigen Sollwerts (C_{CE}) in einen Wert eines Sollwerts (C_{CB}) des elektrischen Stroms einer Wicklung der Kupplung (18) übersetzt und dass das Verhältnis (Cc_{B}) = f (C_{CE}) regelmäßig wieder aktualisiert werden kann.

10. Steuerungsverfahren nach einem der Ansprüche 4 oder 5, **dadurch gekennzeichnet, dass** die Kupplung (18) ein System ist, das, wenn sie am Gleiten ist, fähig ist, das gewünschte Moment zu übertragen, wobei dieses Moment ein direktes Verhältnis mit einer physikalischen Größe aufweist, die durch die zentrale Steuerungseinheit (30) steuerbar ist, und dass dieses Verhältnis regelmäßig wieder aktualisiert werden kann.

## Claims

1. Method for controlling a power unit comprising a heat engine (12) connected to a discrete-ratio gear-shift mechanism (20) via an input clutch (18), and a central control unit (30) which is able to impose on the power unit at least one established-ratio running mode (MC) and one upward gear change mode (MPR) which comprises at least one first disengagement stage (ED), one disengaged situation second stage (SD) and one third re-engagement stage (ER) during which, on the one hand, the slipping torque passing through the clutch (18) is adjusted, depending on the demand for torque by the accelerator pedal (35) or by any driving aid systems, and on the other hand, the torque provided by the engine (12) is adjusted, **characterized in that** the clutch (18) receives at the moment Tr of the start of the re-engagement stage (Er) an established torque command (Cc_{E}) in an open loop as a function of the engine torque which will be established after changing to running mode to allow it to transmit this torque as soon as the re-engagement stage (ER) occurs.

2. Control method according to claim 1, **characterized in that** the value of the engine torque in running mode (MC) after changing is calculated during changing on the basis of the position of the accelerator pedal (35) or any driving aid systems and of the engine speed after changing.

3. Control method according to claim 1 or 2, **characterized in that** the development curve of the torque transmitted by the clutch based on the time between its initial value and its command value (Cc_{E}) depends on the driving style.

4. Control method according to claim 1, 2 or 3, **characterized in that**, during the re-engagement stage (ER), the central control unit (30) detects a set clutch slipping threshold (S_{g}) after which point it commands the torque (C₁₄) provided by the engine (12) to be re-established by sending the engine a command (C_{RCM}) to regulate the torque which develops up to a value (C_{14/0}) associated with the running mode.

5. Control method according to claim 4, **characterized in that** the slipping threshold (S_{g}) is calibrated according to the engaged set rank ratio (R_{D}), and the rate of development of the engine speed.

6. Control method according to one of claims 4 or 5, **characterized in that** the clutch (18) is a dry disc(s) clutch and **in that** the central control unit (30) translates the value of the independent slipping command (Cc_{E}) into a value of a stop position command (C_{PB}) to the clutch (18).

7. Method according to the previous claim, **characterized in that** the central control unit (30) comprises means for self-teaching allowing the relation between (C_{PB}) and (Cc_{E}) to be regularly updated as the vehicle is running.

8. Control method according to one of claims 4 or 5, **characterized in that** the clutch (18) is a wet disc(s) clutch, **in that** the central control unit (30) translates the value of the independent slipping command (Cc_{E}) into a value of a pressure command (C_{PV}) to a jack actuating the disc(s), and **in that** the relation (C_{PV}) = f (Cc_{E}) can be regularly updated.

9. Control method according to one of claims 4 or 5, **characterized in that** the clutch (18) is an electromagnetic powder clutch, **in that** the central control unit (30) translates the value of the independent slipping command (Cc_{E}) into a value of a command (C_{CB}) for electric current from a coil of the clutch (18), and **in that** the relation (C_{CB}) = f(Cc_{E}) can be regularly updated.

10. Control method according to one of claims 4 or 5, **characterized in that** the clutch (18) is a system which is able to transmit the desired torque while it is slipping, this torque having a direct relation with a physical magnitude which can be controlled by the central control unit (30), and **in that** this relation can be regularly updated.
